# EUROPÄISCHE PATENTSCHRIFT

(11) **EP 3 013 506 B1**
(45) Veröffentlichungstag und Bekanntmachung des Hinweises auf die Patenterteilung: **07.06.2017**
(21) Anmeldenummer: 14739065.2
(22) Anmeldetag: 23.06.2014
(51) Int. Cl.: B23F 5/22, B23F 17/00, B23F 19/10

(54) **WÄLZFRÄSMASCHINE MIT WÄLZFRÄSKOPF UND ZWEI ANFASVORRICHTUNGEN AUF EINEM GEMEINSAMEN SCHLITTEN**
HOBBING MACHINE COMPRISING A HOBBER HEAD AND TWO CHAMFERING DEVICES ON A COMMON CARRIAGE
MACHINE À TAILLER PAR FRAISE-MÈRE COMPRENANT UNE TÊTE DE TAILLAGE PAR FRAISE-MÈRE ET DEUX DISPOSITIFS DE CHANFREINAGE SUR UN CHARIOT COMMUN

(30) Priorität: 27.06.2013 DE 102013212430
(43) Veröffentlichungstag der Anmeldung: 04.05.2016
(73) Patentinhaber: FELSOMAT GmbH & Co. KG, 75203 Königsbach-Stein (DE)
(72) Erfinder: PESCHINA, Jürgen, 75438 Knittlingen (DE)
(74) Vertreter: Kohler Schmid Möbus Patentanwälte
(86) Internationale Anmeldenummer: PCT/EP2014/063092
(87) Internationale Veröffentlichungsnummer: WO 2014/206901

(56) Entgegenhaltungen:
- DD-A- 38 465
- DE-A1- 10 211 129
- DE-U1- 20 320 294
- DE-U1-202005 014 619

## Beschreibung

Die Erfindung betrifft eine Wälzfräsmaschine, mit
- einer Werkstückspindel zum Rotieren eines Werkstücks um eine Rotationsachse,
- einem Wälzfräskopf zur Wälzfräsbearbeitung des Werkstücks,
- einer ersten Anfasvorrichtung zum Anfasen des Werkstücks in einem ersten axialen Bereich,
- einer zweiten Anfasvorrichtung zum Anfasen des Werkstücks in einem zweiten axialen Bereich, und
- einem gemeinsamen Schlitten, auf dem sowohl der Wälzfräskopf als auch die erste Anfasvorrichtung und die zweite Anfasvorrichtung angeordnet sind, und mit dem der Wälzfräskopf, die erste Anfasvorrichtung und die zweite Anfasvorrichtung entlang einer Verfahrrichtung zusammen verfahren werden können.

Eine solche Wälzfräsmaschine ist aus der DE 20 2005 014 619 U1 bekannt geworden.

Durch Wälzfräsen können praktisch beliebige Verzahnungen an Werkstücken, etwa Zahnrädern oder Getrieben, mit hoher Produktivität erzeugt werden. Beim Wälzfräsen können jedoch an den gefertigten Zähnen Materialüberstände und scharfe Kanten entstehen, die üblicherweise durch Nachbearbeitungsverfahren beseitigt werden.

Ein beim Wälzfräsen erzeugter, in axialer Richtung gegenüber den Zähnen des Werkstücks überstehender Grat kann durch ein Schneidwerkzeug abgeschält werden, das an der Stirnseite des Werkstücks geführt wird ("Primärentgraten").

Ein in radialer Richtung gegenüber den Zähnen überstehender Grat oder auch eine scharfe Kante der Zähne wird typsicherweise durch Anfasen beseitigt, wobei ein flaches Anfaswerkzeug an die abzuflachende Kante des Werkstücks gepresst wird; dabei wird das Material des Werkstücks plastisch verformt, wobei in axialer Richtung und in radialer Richtung merkliche Materialwulste entstehen können. Die axialen Materialwulste können wiederum durch ein Schneidwerkzeug abgeschält werden ("Sekundärentgraten"). Die radialen Materialwulste können, falls gewünscht, durch Feinfräsen beseitigt werden.

Typischerweise findet das Primärentgraten zusammen mit dem Wälzfräsen statt, wohingegen für das Anfasen und Sekundärentgraten das Werkstück auf eine nachfolgende Bearbeitungsstation verbracht wird, vgl. beispielsweise das Firmenprospekt "Gleason Pfauter Hobbing Machines P60 P90", Gleason Pfauter Maschinenfabrik GmbH, Ludwigsburg, DE, Drucklegung 7/2003.

Aus der DE 10 2006 044 738 B3 ist es bekannt geworden, das Anfasen und Sekundärentgraten in der gleichen Aufspannung des Werkstücks, jedoch auf einer gegenüber dem Wälzfräsen verschwenkten Position der zugehörigen Werkstückspindel durchzuführen. Auf einem Drehhalter sind dabei zwei Werkstückspindeln angeordnet, die durch Drehen des Drehhalters zwischen einer Bearbeitungsposition für das Wälzfräsen und einer Transferposition, in der auch das Anfasen und Sekundärentgraten stattfindet, wechseln können. Mit der aus der DE 10 2006 044 738 B3 bekannten Vorrichtung ist es möglich, wälzgefräste, angefaste und entgratete Werkstücke bei sehr geringen Nebenzeiten zu fertigen. Nachteilig dabei ist jedoch der relativ große bauliche Aufwand.

Die DE 20 2005 014 619 U1 beschreibt eine Werkzeuganordnung, wobei auf einem gemeinsamen Dorn ein Schruppwälzfräskörper, zwei Entgratfräser und ein Schlichtwälzfräskörper angeordnet sind. Mit der Werkzeuganordnung kann eine entgratete und angefaste Schrägverzahnung für Stirnräder hergestellt werden.

### Aufgabe der Erfindung

Der Erfindung liegt die Aufgabe zugrunde, eine baulich einfache Wälzfräsmaschine vorzustellen, mit der bei geringem Zeitaufwand wälzgefräste und angefaste Werkstücke, die wenigstens zwei verschiedene Verzahnungsbereiche aufweisen, gefertigt werden können, wobei der Wälzfräskopf während des Anfasens in eine nicht mit dem Werkstück kollidierende Position verbracht werden kann.

### Kurze Beschreibung der Erfindung

Diese Aufgabe wird gelöst durch eine Wälzfräsmaschine der eingangs genannten Art, die dadurch gekennzeichnet ist,
dass der Wälzfräskopf auf dem gemeinsamen Schlitten mittels einer Wälzfräs-Zustellvorrichtung unabhängig von den Anfasvorrichtungen in eine Zustellrichtung senkrecht zur Verfahrrichtung des gemeinsamen Schlittens verfahrbar ist.

Die erfindungsgemäße Wälzfräsmaschine sieht ein integriertes Anfasen vor, d.h. das Anfasen findet auf derselben Werkstückspindel wie das Wälzfräsen statt, ohne die Werkstückspindel nach dem Wälzfräsen zu verfahren. Entsprechend ist die Werkstückspindel insgesamt typischerweise ortsfest ausgebildet, und typischerweise weist die Wälzfräsmaschine auch nur eine einzige Werkstückspindel auf.

Das Anfasen findet nach dem Wälzfräsen des Werkstücks statt. Entsprechend kann das Wälzfräswerkzeug während des Anfasens des Werkstücks ohnehin nicht an der Werkstückspindel eingesetzt werden. Die Erfindung sieht daher vor, die ohnehin notwendige Verfahrbarkeit des Wälzfräskopfs auf einem Schlitten entlang einer Verfahrrichtung (typischerweise parallel zur Rotationsachse der Werkstückspindel) auch für das Anfasen zu nutzen. Entsprechend sind die beiden Anfasvorrichtungen auf einem gemeinsamen Schlitten, der auch den Wälzfräskopf trägt, angeordnet. Eine separate Verfahrbarkeit der Anfasvorrichtungen in Verfahrrichtung wird erfindungsgemäß nicht benötigt. Dies macht den Aufbau der Wälzfräsmaschine besonders einfach.

Dadurch, dass zwei Anfasvorrichtungen auf dem gemeinsamen Schlitten vorgesehen sind, können in schneller Folge (oder sogar, bei geeigneter Einrichtung der Anfasvorrichtungen, ganz oder teilweise gleichzeitig) zwei verschiedene axiale Bereiche eines Werkstücks, die mit unterschiedlichen Verzahnungen gefertigt werden, durch Anfasen nachbearbeitet werden. Es ist dafür weder ein Umspannen des Werkstücks noch eine Verstellung einer Anfasvorrichtung notwendig.

Für die gesamte Wälzfräsbearbeitung mit dem Wälzfräskopf und das Anfasen (und gegebenenfalls auch für ein abschließendes Feinfräsen mit dem Wälzfräskopf) wird nur ein einziger, gemeinsamer Schlitten benötigt, der motorisch, typischerweise über eine CNC-Steuerung, alle für diese Prozesse notwendigen Werkzeuge in Verfahrrichtung (typischerweise parallel zur Rotationsachse der Werkstückspindel) verfahren kann.

Gemäß der Erfindung ist vorgesehen, dass der Wälzfräskopf auf dem gemeinsamen Schlitten mittels einer Wälzfräs-Zustellvorrichtung in eine Zustellrichtung senkrecht zur Verfahrrichtung des gemeinsamen Schlittens verfahrbar ist. Durch die eigene Wälzfräs-Zustellvorrichtung kann der Wälzfräskopfs unabhängig von den Anfasvorrichtungen in Zustellrichtung verfahren werden. Dadurch kann der Wälzfräskopf insbesondere während des Anfasens leicht in eine nicht mit dem Werkstück kollidierende Position verbracht werden. Im Übrigen verfügt der Wälzfräskopf über die für eine Wälzfräsbearbeitung üblichen Achsen, insbesondere zur Verschwenkung des Wälzfräswerkzeugs um eine Verschwenkachse, die senkrecht zur Rotationsachse der Werkstückspindel verlauft, zum Rotieren des Wälzfräswerkzeugs um eine Werkzeugachse, die senkrecht zur Verschwenkachse verlauft, und zum Verfahren des Wälzfräswerkzeugs parallel zur Werkzeugachse. Die Zustellrichtung des Wälzfräskopfs Verläuft typischerweise horizontal oder leicht gegen die Horizontale geneigt (etwa bis 25° gegen die Horizontale, beispielsweise bei einem nach hinten um ca. 20°±5° gegen die Horizontale abfallenden Maschinenbett).

### Bevorzugte Ausführungsformen der Erfindung

Bei einer vorteilhaften Ausführungsform der erfindungsgemäßen Wälzfräsmaschine verlaufen die Rotationsachse der Werkstückspindel und die Verfahrrichtung des gemeinsamen Schlittens parallel. Dadurch können mit dem gemeinsamen Schlitten unterschiedliche axiale Positionen am Werkstück besonders leicht angefahren werden.

Bevorzugt ist auch eine Ausführungsform, bei der die Rotationsachse der Werkstückspindel und die Verfahrrichtung jeweils horizontal verlaufen. Bei einem horizontalen Aufbau stellt sich ein günstiger, von der Gewichtskraft unterstützter Spänefluss weg vom Werkstück und von der Werkstückspindel ein; heiße Spänenester an der Werkstückspindel, die zu Fertigungsungenauigkeiten führen können, werden vermieden.

Besonders bevorzugt ist eine Ausführungsform, bei der der Wälzfräskopf, die erste Anfasvorrichtung und die zweite Anfasvorrichtung auf dem gemeinsamen Schlitten bezüglich der Verfahrrichtung des gemeinsamen Schlittens hintereinander angeordnet sind, insbesondere wobei die erste Anfasvorrichtung und die zweite Anfasvorrichtung auf dem gemeinsamen Schlitten zueinander benachbart sind. Die Hintereinander-Anordnung ist zum einen platzsparend (im Gegensatz zu einer gegenüberliegenden Anordnung, mit der Werkstückspindel zwischen den Werkzeug-Baugruppen). Zum anderen sorgt eine benachbarte Anordnung der beiden Anfasvorrichtungen für eine kurze Verfahrstrecke beim Wechsel zwischen den Anfasvorrichtungen bzw. ermöglicht einen gleichzeitigen Einsatz beider Anfasvorrichtungen bei Werkstücken mit eng benachbarten, unterschiedlich nachzubearbeitenden axialen Bereichen. Entsprechend können Nebenzeiten kurz gehalten werden.

Vorteilhaft ist weiterhin eine Ausführungsform, die vorsieht, dass die erste Anfasvorrichtung auf dem gemeinsamen Schlitten mittels einer ersten Anfas-Zustellvorrichtung in eine Zustellrichtung senkrecht zur Verfahrrichtung des gemeinsamen Schlittens verfahrbar ist,
und dass die zweite Anfasvorrichtung auf dem gemeinsamen Schlitten mittels einer zweiten Anfas-Zustellvorrichtung in eine Zustellrichtung senkrecht zur Verfahrrichtung des gemeinsamen Schlittens verfahrbar ist. Dadurch können die beiden Anfasvorrichtungen unabhängig voneinander zugestellt werden, was die Werkstückbearbeitung flexibler macht. Alternativ kann auch eine gemeinsame Anfas-Zustellvorrichtung für beide Anfasvorrichtungen vorgesehen sein; in diesem Fall sollte zumindest eine der Anfasvorrichtungen parallel zur Zustellrichtung auf der gemeinsamen Zustellvorrichtung verstellbar sein. Die Zustellrichtungen der Anfasvorrichtungen verlaufen typischerweise horizontal oder leicht gegen die Horizontale geneigt (etwa bis 25° gegen die Horizontale, beispielsweise bei einem nach hinten um ca. 20°±5°gegen die Horizontale abfallenden Maschinenbett).

Bei einer bevorzugten Ausführungsform ist vorgesehen, dass die erste Anfasvorrichtung und die zweite Anfasvorrichtung jeweils als kombinierte Anfas- und Schneidvorrichtung ausgebildet sind, die jeweils auch zum Abschälen von Primär- und/oder Sekundärgraten des Werkstücks ausgebildet sind. Mit den kombinierten Anfas- und Schneidevorrichtungen kann bei geringem baulichem Aufwand und bei keiner oder nur geringer Mehrzeit ein weiterer Bearbeitungsschritt, insbesondere das Sekundärentgraten, mit vollzogen werden. Bei einer kombinierten Anfas- und Schneidevorrichtung ist ein Schneidwerkzeug vorgesehen, das mittels des gemeinsamen Schlittens zusammen mit dem Anfaswerkzeug bewegt wird, gegebenenfalls auch auf einer gemeinsamen Zustellvorrichtung. Vorteilhafter weise werden die Anfasund die Schneidefunktion gleichzeitig eingesetzt. Bevorzugt kann das Anfaswerkzeug oder das Schneidwerkzeug auch mindestens eine eigene (unabhängige) Zustellbewegung ausführen, um eine unabhängige Ausrichtung oder auch eine zeitlich versetzte Benutzung der beiden Werkzeuge zu ermöglichen.

Vorteilhaft ist weiterhin eine Ausführungsform, die vorsieht, dass an der Wälzfräsmaschine ein Schwenkarm ausgebildet ist, der auf einem Schwenkarmschlitten entlang einer Zusatzverfahrrichtung parallel zur Verfahrrichtung verfahrbar ist, und der um eine parallel zur Verfahrrichtung verlaufende Achse am Schwenkarmschlitten verschwenkbar ist,
und dass am Schwenkarm wenigstens ein Schneidwerkzeug zum Abschälen von Primär- und/oder Sekundärgraten des Werkstücks angeordnet ist. Mit einem Schwenkarm ist eine baulich besonders einfache Zustellung des Schneidwerkzeugs möglich.

In einer bevorzugten Weiterbildung dieser Ausführungsform sind am Schwenkarm zwei Schneidwerkzeuge angeordnet, deren Abstand parallel zur Verfahrrichtung verstellbar ist. Mit den beiden Schneidwerkzeugen können einander gegenüberliegende Stirnseiten von Werkstücken entgratet werden, wobei durch die Verstellbarkeit des Abstands eine Anpassung an die Größe des Werkstücks leicht möglich ist. Bei exakter Einstellung des Abstands kann sogar eine gleichzeitige Entgratung der beiden Stirnseiten erfolgen.

Bei einer anderen vorteilhaften Weiterbildung ist am Schwenkarm weiterhin eine dritte Anfasvorrichtung und/oder ein motorisch angetriebenes Feilwerkzeug angeordnet ist. Dadurch kann der Schwenkarm weitere Funktionen wahrnehmen, und so die Werkstückbearbeitung universeller werden. Man beachte, dass der Schwenkarm zusätzlich zu und unabhängig vom Wälzfräskopf und den Anfasvorrichtungen, die auf dem gemeinsamen Schlitten angeordnet sind, eingesetzt werden kann.

Bevorzugt ist dabei vorgesehen, dass die dritte Anfasvorrichtung und/oder das Feilwerkzeug in Verschwenkrichtung versetzt zum wenigstens einen Schneidwerkzeug des Schwenkarms angeordnet ist, so dass die dritte Anfasvorrichtung und/oder das Feilwerkzeug einerseits und das wenigstens eine Schneidwerkzeug des Schwenkarms andererseits bei unterschiedlichen Verschwenkwinkeln des Schwenkarms am Werkstück angreifen. Die Schwenkbewegung des Schwenkarms kann dadurch für eine Auswahl des aktiven Werkzeugs eingesetzt werden.

Besonders bevorzugt ist eine Ausführungsform, bei der die Anfasvorrichtungen jeweils zwei einander gegenüberliegende Anfasscheiben aufweisen, deren Abstand parallel zur Verfahrrichtung verstellbar ist. Mit den beiden Anfasscheiben können gleichzeitig die gegenüberliegenden Kanten eines Werkstücks angefast (plastisch eingedrückt) werden. Durch die Verstellbarkeit des Abstands kann eine Anpassung an das jeweils zu fertigende Werkstück auf einfache Weise erfolgen.

Vorteilhaft ist auch eine Ausführungsform, bei der die erste und/oder die zweite Anfasvorrichtung auf dem gemeinsamen Schlitten parallel zur Verfahrrichtung verschiebbar ist. Auch dies ermöglicht eine Anpassung an das jeweils zu fertigende Werkstück, insbesondere an die Lage des ersten und zweiten axialen Bereichs, wenn die beiden Anfasvorrichtungen gleichzeitig (und nicht nur nacheinander) eingesetzt werden sollen.

In den Rahmen der vorliegenden Erfindung fällt auch die Verwendung einer erfindungsgemäßen Wälzfräsmaschine zum
a) Wälzfräsen eines Werkstücks mit dem Wälzfräskopf und
b) anschließendem Anfasen des Werkstücks gleichzeitig in zwei unterschiedlichen axialen Bereichen des Werkstücks mit dem ersten und dem zweiten Anfaswerkzeug,
wobei das Wälzfräsen und das Anfasen in derselben Aufspannung des Werkstücks auf der Werkstückspindel erfolgt. Durch das gleichzeitige Anfasen in den beiden unterschiedlichen axialen Bereichen des Werkstücks und das Wälzfräsen und Anfasen in derselben Aufspannung ist eine besonders schnelle Gesamtbearbeitung des Werkstücks möglich. Man beachte, dass die Werkstückspindel während der Verwendung typischerweise ortsfest bleibt, und insbesondere nicht mittels eines Drehhalters verschwenkt wird. Typischerweise findet in derselben Aufspannung während Schritt a) auch ein Primärentgraten (also ein Abschälen von axialen Materialüberständen / Primärgraten), und während oder nach Schritt b) auch ein Sekundärentgraten (also ein Abschälen von axial überstehenden Materialwulsten / Sekundärgraten) statt.

Eine bevorzugte Variante der erfindungsgemäßen Verwendung sieht vor, dass nach dem Anfasen in derselben Aufspannung des Werkstücks auf der Werkstückspindel weiterhin
c) ein Feinfräsen des Werkstücks mit dem Wälzfräskopf
   erfolgt. Das Feinfräsen verlängert die Gesamtbearbeitungszeit nur geringfügig, weil keine erneute Aufspannung des Werkstück zu erfolgen braucht. Mit dem Feinfräsen können radiale überstehende Materialwulste beseitigt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Schrägansicht auf eine Ausführungsform einer erfindungsgemäßen Wälzfräsmaschine;
- Fig. 2: eine schematische Aufsicht auf die Wälzfräsmaschine von Fig. 1;
- Fig. 3a: eine schematische seitliche Ansicht eines Schwenkarms mit dritter Anfasvorrichtung und Schneidwerkzeug, in einer Verschwenkstellung für das Anfasen, für eine erfindungsgemäße Wälzfräsmaschine;
- Fig. 3b: der Schwenkarm von Fig. 3a, in einer schematischen Aufsicht;
- Fig. 4a: eine schematische seitliche Ansicht des Schwenkarms von Fig. 3a, in einer Verschwenkstellung für das Entgraten;
- Fig. 4b: der Schwenkarm von Fig. 4a, in einer schematischen Aufsicht, mit rechtsseitig anliegendem Werkstück;
- Fig. 4c: der Schwenkarm von Fig. 4a, in einer schematischen Aufsicht, mit linksseitig anliegendem Werkstück.

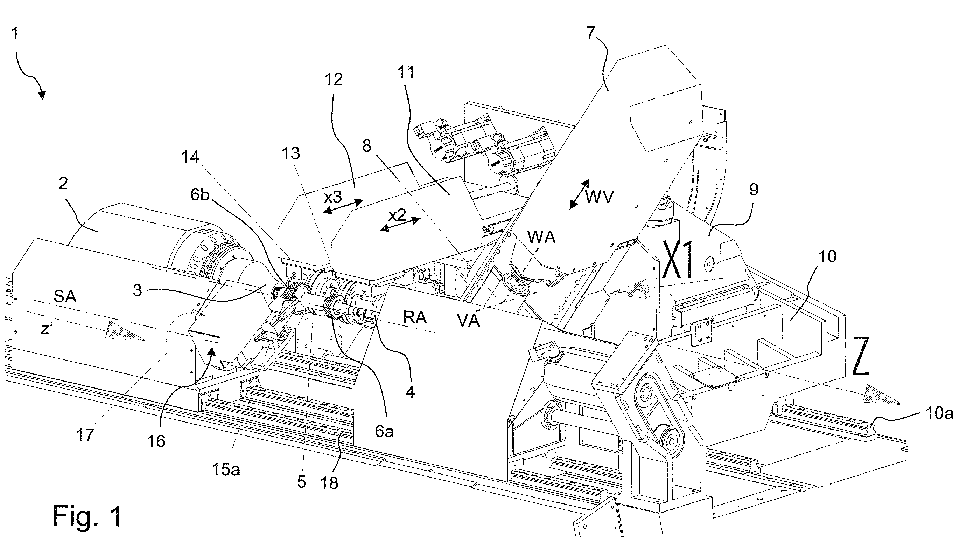

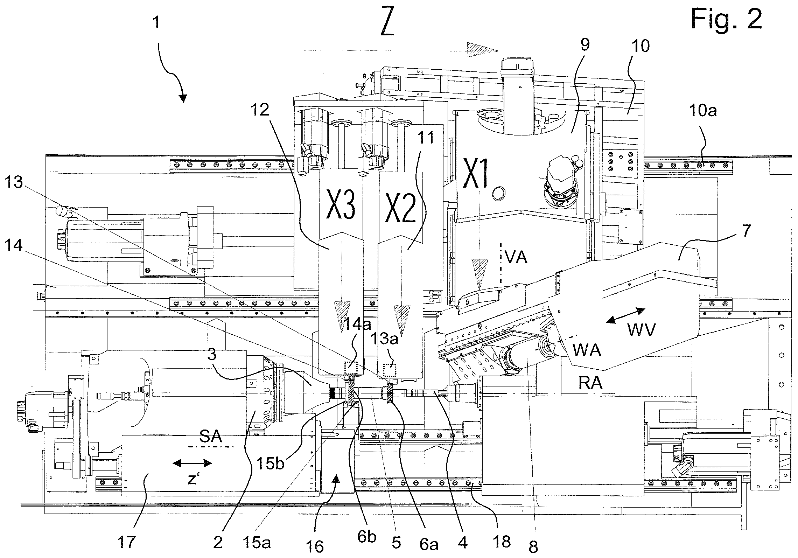

Eine Ausführungsform einer erfindungsgemäßen Wälzfräsmaschine 1 ist in den **Fig. 1** in schematischer Schrägansicht und in **Fig. 2** in schematischer Aufsicht dargestellt.

Die Wälzfräsmaschine 1 weist eine einzige Werkstückspindel 2 auf, die um eine (hier horizontale) Rotationsachse RA motorisch drehbar ist. Mit einer Spannvorrichtung 3 der Werkstückspindel 2 und einem Reitstock 4 ist ein Werkstück 5 gehalten, an welchem zwei verschiedene Verzahnungen in einem ersten axialen Bereich 6a und einem zweiten axialen Bereich 6b gefertigt werden.

Die Wälzfräsmaschine 1 umfasst einen Wälzfräskopf 7 mit einem Wälzfräswerkzeug 8. Das Wälzfräswerkzeug 8 ist um eine Werkzeugachse WA rotierbar und um eine Verschwenkachse VA verschwenkbar, wobei die Verschwenkachse VA horizontal und senkrecht zur Rotationsachse RA verläuft. Das Wälzfräswerkzeug 8 ist weiterhin parallel zur Werkzeugachse WA in Richtung WV verfahrbar. Der Wälzfräskopf 7 ist mittels einer Wälzfräs-Zustellvorrichtung 9 in eine (hier horizontale) Zustellrichtung x1 senkrecht zur Rotationsachse RA verfahrbar.

Die Wälzfräs-Zustellvorrichtung 9 ist auf einem gemeinsamen Schlitten 10 angeordnet, der in eine Verfahrrichtung z parallel zur Rotationsachse RA der Werkstückspindel 2 auf Schienen 10a verfahrbar ist.

Auf dem gemeinsamen Schlitten 10 sind weiterhin eine erste Anfas-Zustellvorrichtung 11 und eine zweite Anfas-Zustellvorrichtung 12 angeordnet. Mit der ersten Anfas-Zustellvorrichtung 11 kann ein erstes Anfaswerkzeug 13 in eine (hier horizontale) Zustellrichtung x2 senkrecht zur Verfahrrichtung z an das Werkstück 5 in dessen axialem Bereich 6a zugestellt werden. Ebenso kann mit der zweiten Anfas-Zustellvorrichtung 12 ein zweites Anfaswerkzeug 14 in eine (hier horizontale) Zustellrichtung x3 senkrecht zur Verfahrrichtung z an das Werkstück 5 in dessen axialem Bereich 6b zugestellt werden.

Die zueinander parallelen Zustellrichtungen (Zustellachsen) x1, x2, x3 der hintereinander angeordneten Werkzeuge 8, 13, 14 können unabhängig voneinander angesteuert werden. Über den gemeinsamen Schlitten 10 können die Werkzeuge 8, 13, 14 in Verfahrrichtung z zusammen positioniert werden.

Die Anfaswerkzeuge 13, 14 umfassen hier jeweils zwei einander gegenüberliegende Anfasscheiben, wie in Fig. 1 erkannt werden kann. Die Anfaswerkzeuge 13, 14 können auf ihrer jeweils zugehörigen Anfas-Zustellvorrichtung 11, 12 in ihrer Position in z-Richtung und auch in ihrer Weite (Abstand der gegenüberliegenden Anfasscheiben in z-Richtung) verstellt werden, um eine Anpassung an das Werkstück 5 vorzunehmen; die Anpassung erfolgt typischerweise manuell, kann aber auch motorisch automatisiert eingerichtet werden. Man beachte, dass auf den Anfas-Zustellvorrichtungen 11, 12 auch zusätzlich Schneidwerkzeuge 13a, 14a vorgesehen sein können, um so jeweils kombinierte Anfas- und Schneidwerkzeuge auf den Anfas-Zustellvorrichtungen 11, 12 zu erhalten (gestrichelt eingezeichnet). Alternativ können die zusätzlichen Schneidwerkzeuge 13a, 14a auch direkt auf dem gemeinsamen Schlitten 10 vorgesehen sein. Die Schneidwerkzeuge 13a, 14a können zum Abschälen von axialen Überständen (Primärgraten und/oder Sekundärgraten) eingesetzt werden.

In der in den Figuren 1 und 2 gezeigten Situation ist das Wälzfräsen in den axialen Bereichen 6a, 6b des Werkstücks 5 bereits abgeschlossen, und das Anfasen der axialen Bereiche 6a, 6b findet simultan mit den Anfaswerkzeugen 13, 14 statt. Am axialen Bereich 6b findet zeitgleich zum Anfasen auch ein Sekundärentgraten mit Schneidwerkzeugen 15a, 15b statt, die an einem Schwenkarm 16 angeordnet ist. Die Schneidwerkzeuge 15a, 15b umfassen hier zwei einander gegenüberliegende Schneiden, deren Abstand (in z) zur Anpassung an das Werkstück 5 bezüglich der z-Richtung verstellbar ist; die Anpassung der Schneidwerkzeuge 15a, 15b erfolgt typischerweise manuell, kann aber auch motorisch automatisiert eingerichtet werden.

Der Schwenkarm 16 ist um eine Schwenkachse SA rotierbar, die parallel zur Rotationsachse RA verlauft. Der Schwenkarm 16 ist weiterhin mit einem Schwenkarmschlitten 17 entlang einer Zusatzverfahrrichtung z' parallel zur Rotationsachse RA auf Schienen 18 verfahrbar.

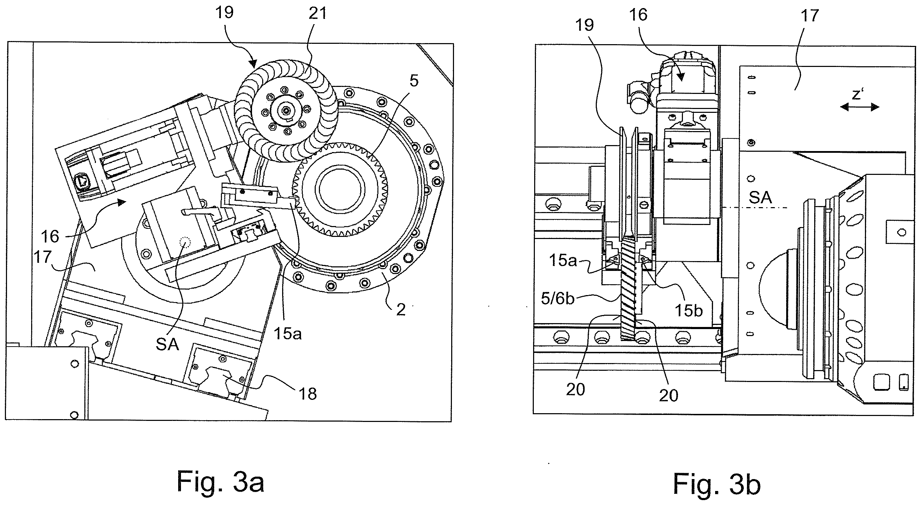

Falls gewünscht, kann der Schwenkarm 16 zusätzlich zu Schneidwerkzeugen 15a, 15b auch weitere Werkzeuge tragen, insbesondere ein drittes Anfaswerkzeug 19, wie in **Fig. 3a** in einer Seitenansicht und **Fig. 3b** in einer Aufsicht jeweils schematisch dargestellt, wobei Teile des Werkstücks 5 und dessen Befestigung sowie die zweite Anfasvorrichtung 14 der besseren Übersicht wegen weggelassen wurden.

Bei dem in Fig. 3a und Fig. 3b dargestellten Verschwenkwinkel des Schwenkarms 16 greift das dritte Anfaswerkzeug 19 gerade mit zwei Anfasscheiben am Werkstück 5 bzw. dessen zweitem axialen Bereich 6b an, um ein Anfasen (plastisches Eindrücken) der Kanten 20 der Zähne des Werkstücks 5 zu bewirken. Die Schneidwerkzeuge 15a, 15b sind hingegen nicht in einer für eine Bearbeitung geeigneten Position, und liegen im Übrigen auch aufgrund der Position des Schwenkarmschlittens 17 bezüglich z' nicht am Werkstück 5 an.

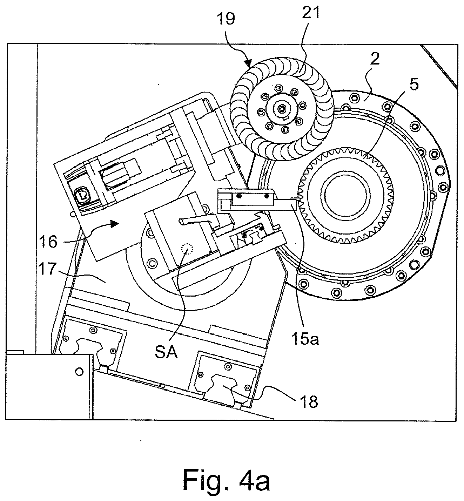

Nach Abschluss des Anfasens wird der Schwenkarm 16 geringfügig um die Schwenkachse SA nach oben (in Fig. 3a gegen den Uhrzeigersinn) geschwenkt, wobei das dritte Anfaswerkzeug 19 mit dem Werkstück 5 außer Eingriff tritt, und die Schneidwerkzeuge 15a, 15b werden bezüglich ihrer Verschwenklage um die Achse SA in eine für eine Bearbeitung geeignete Position verbracht, vgl. die Seitenansicht von **Fig. 4a****.**

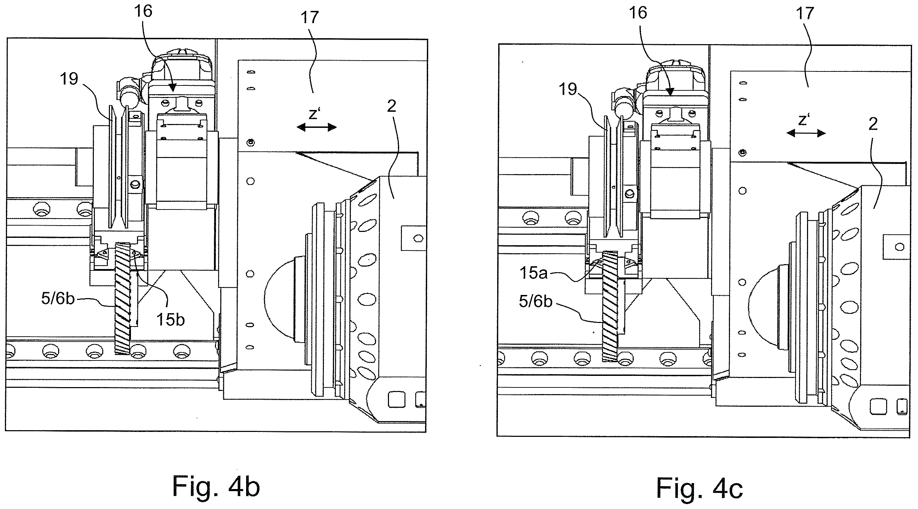

Weiterhin wird der Schwenkarmschlitten 17 geringfügig von der Werkstückspindel 2 weg (in Fig. 3b nach links) verfahren, so dass das werkstückspindelnahe Schneidwerkzeug 15b am Werkstück 5 zur Anlage kommt, wie in **Fig. 4b** ersichtlich. Das Schneidwerkzeug 15b kann dann Sekundärgrate von der werkstückspindelnahen Stirnseite des Werkstücks 5 bzw. dessen axialem Bereich 6b abschälen.

Anschließend kann der Schwenkarmschlitten 17 geringfügig auf die Werkstückspindel 2 zu verfahren werden, so dass das werkstückspindelferne Schneidwerkzeug 15a am Werkstück 5 zu Anlage kommt, wie in **Fig. 4c** dargestellt. Das Schneidwerkzeug 15a kann dann an der anderen, werkstückspindelfernen Stirnseite des Werkstücks 5 bzw. dessen axialem Bereich 6b die Sekundärgrate abschälen.

Die Zusatzverfahrrichtung z' bzw. der Schwenkarmschlitten 17 kann damit zum Zustellen der Schneidwerkzeuge 15a, 15b eingesetzt werden; hierbei sollte der Abstand der Schneidwerkzeuge 15a, 15b allerdings größer als die Höhe (in z') des Werkstücks 5 bzw. dessen zu bearbeitendem axialen Bereich 6b gewählt werden.

In Fig. 3a und Fig. 4a ebenfalls zu erkennen ist ein Feilwerkzeug 21, das Feilflächen außenseitlich auf den Anfasscheiben des dritten Anfaswerkzeugs 19 ausbildet, und bei geeigneter Positionierung des Schwenkarms 16 und des Schwenkarmschlittens 17 am Werkstück 5 eingesetzt werden kann.

Im Allgemeinen beginnt eine Werkstückbearbeitung auf der erfindungsgemäßen Wälzfräsmaschine 1 zunächst mit der Wälzfräsbearbeitung des Werkstücks 5. Hierfür wird der gemeinsame Schlitten 10 so positioniert, dass das Wälzfräswerkzeug 8 des Wälzfräskopfs 7 einen ersten der axialen Bereiche 6a, 6b des Werkstücks 5 bearbeiten kann. Zeitgleich können entstehende Primärgrate am Werkstück 5 mit den Schneidwerkzeugen 15a, 15b am Schwenkarm 16 entfernt werden. Anschließend wird der gemeinsame Schlitten 10 umpositioniert, so dass ein zweiter der axialen Bereiche 6a, 6b des Werkstücks 5 mit dem Wälzfräswerkzeug 8 bearbeitet werden kann (bei noch mehr axialen Bereichen mit unterschiedlichen Verzahnungen werden auch diese entsprechend abgearbeitet).

Sodann erfolgt das Anfasen und Entgraten. Dafür wird der gemeinsame Schlitten 10 so umpositioniert, dass zumindest eines der Anfaswerkzeuge 13, 14 einen der axialen Bereiche 6a, 6b bearbeiten kann (bevorzugt können beide Anfaszeuge 13, 14, jeweils einen der axialen Bereich 6a, 6b simultan bearbeiten). Gleichzeitig oder anschließend kann mit den Schneidwerkzeugen 15a, 15b auf dem Schwenkarm 16 oder mit den Anfaswerkzeugen 13, 14 kombinierten Schneidwerkzeugen 13a, 14a ein Abschälen von axial überstehenden Materialwülsten erfolgen (Sekundärentgraten). Falls erforderlich, erfolgt eine Umpositionierung des gemeinsamen Schlittens 10, durch die ein anderes Anfaswerkzeug 13, 14 einen noch nicht bearbeiteten axialen Bereich 6a, 6b bearbeiten kann; gleichzeitig oder anschließend kann wiederum das Sekundärentgraten erfolgen (bei noch mehr axialen Bereichen mit unterschiedlichen Verzahnungen werden auch diese entsprechend abgearbeitet).

Falls gewünscht, kann anschließend noch ein Feinfräsen des Werkstücks 5 erfolgen, wofür die zu bearbeitenden axialen Bereiche 6a, 6b des'Werkstücks 5 nacheinander nochmals mit dem Wälzfräswerkzeug 8 bearbeitet werden, wofür wiederum der gemeinsame Schlitten 10 entsprechend umpositioniert wird.

Für all diese Bearbeitungen braucht das Werkstück 5 nicht umgespannt zu werden, sondern kann in einer rotierenden Werkstückspindel ortsfest gehalten werden.

Man beachte, dass eine erfindungsgemäße Wälzfräsmaschine 1 für die Fertigung komplizierterer Werkstücke, etwa mit drei oder noch mehr axialen Bereichen mit unterschiedlichen Verzahnungen, entsprechend auch drei oder noch mehr Anfasvorrichtungen auf dem gemeinsamen Schlitten vorsehen kann.

## Patentansprüche

1. Wälzfräsmaschine (1), mit
- einer Werkstückspindel (2) zum Rotieren eines Werkstücks (5) um eine Rotationsachse (RA),
- einem Wälzfräskopf (7) zur Wälzfräsbearbeitung des Werkstücks (5),
- einer ersten Anfasvorrichtung (13) zum Anfasen des Werkstücks (5) in einem ersten axialen Bereich (6a),
- einer zweiten Anfasvorrichtung (14) zum Anfasen des Werkstücks (5) in einem zweiten axialen Bereich (6b), und
- einem gemeinsamen Schlitten (10), auf dem sowohl der Wälzfräskopf (7) als auch die erste Anfasvorrichtung (13) und die zweite Anfasvorrichtung (14) angeordnet sind, und mit dem der Wälzfräskopf (7), die erste Anfasvorrichtung (13) und die zweite Anfasvorrichtung (14) entlang einer Verfahrrichtung (z) zusammen verfahren werden können,
**dadurch gekennzeichnet,**
**dass** der Wälzfräskopf (7) auf dem gemeinsamen Schlitten (10) mittels einer Wälzfräs-Zustellvorrichtung (9) unabhängig von den Anfasvorrichtungen (13, 14) in eine Zustellrichtung (x1) senkrecht zur Verfahrrichtung (z) des gemeinsamen Schlittens (10) verfahrbar ist.

2. Wälzfräsmaschine (1) nach Anspruch 1, **dadurch gekennzeichnet, dass** die Rotationsachse (RA) der Werkstückspindel (2) und die Verfahrrichtung (z) des gemeinsamen Schlittens (10) parallel verlaufen.

3. Wälzfräsmaschine (1) nach einem der vorhergehenden Ansprüche, **dadurch gekennzeichnet, dass** die Rotationsachse (RA) der Werkstückspindel (2) und die Verfahrrichtung (z) jeweils horizontal verlaufen.

4. Wälzfräsmaschine (1) nach einem der vorhergehenden Ansprüche,
**dadurch gekennzeichnet, dass** der Wälzfräskopf (7), die erste Anfasvorrichtung (13) und die zweite Anfasvorrichtung (14) auf dem gemeinsamen Schlitten (10) bezüglich der Verfahrrichtung (z) des gemeinsamen Schlittens (10) hintereinander angeordnet sind, insbesondere wobei die erste Anfasvorrichtung (13) und die zweite Anfasvorrichtung (14) auf dem gemeinsamen Schlitten (10) zueinander benachbart sind.

5. Wälzfräsmaschine (1) nach einem der vorhergehenden Ansprüche,
**dadurch gekennzeichnet,**
**dass** die erste Anfasvorrichtung (13) auf dem gemeinsamen Schlitten (10) mittels einer ersten Anfas-Zustellvorrichtung (11) in eine Zustellrichtung (x2) senkrecht zur Verfahrrichtung (z) des gemeinsamen Schlittens (10) verfahrbar ist,
und **dass** die zweite Anfasvorrichtung (14) auf dem gemeinsamen Schlitten (10) mittels einer zweiten Anfas-Zustellvorrichtung (12) in eine Zustellrichtung (x3) senkrecht zur Verfahrrichtung (z) des gemeinsamen Schlittens (10) verfahrbar ist.

6. Wälzfräsmaschine (1) nach einem der vorhergehenden Ansprüche,
**dadurch gekennzeichnet, dass** die Zustellrichtung (x1) des Wälzfräskopfs (7) horizontal oder bis zu 25° gegen die Horizontale geneigt verläuft.

7. Wälzfräsmaschine (1) nach einem der vorhergehenden Ansprüche,
**dadurch gekennzeichnet, dass** die erste Anfasvorrichtung (13) und die zweite Anfasvorrichtung (14) jeweils als kombinierte Anfas- und Schneidvorrichtung ausgebildet sind, die jeweils auch zum Abschälen von Primär- und/oder Sekundärgraten des Werkstücks (5) ausgebildet sind.

8. Wälzfräsmaschine (1) nach einem der vorhergehenden Ansprüche,
**dadurch gekennzeichnet, dass** an der Wälzfräsmaschine (1) ein Schwenkarm (16) ausgebildet ist, der auf einem Schwenkarmschlitten (17) entlang einer Zusätzvertahrrichtung (z') parallel zur Verfahrrichtung (z) verfahrbar ist, und der um eine parallel zur Verfahrrichtung (z) verlaufende Achse (SA) am Schwenkarmschlitten (17) verschwenkbar ist,
und dass am Schwenkarm (16) wenigstens ein Schneidwerkzeug (15a, 15b) zum Abschälen von Primär- und/oder Sekundärgraten des Werkstücks (5) angeordnet ist.

9. Wälzfräsmaschine (1) nach Anspruch 8, **dadurch gekennzeichnet, dass** am Schwenkarm (16) zwei Schneidwerkzeuge (15a, 15b) angeordnet sind, deren Abstand parallel zur Verfahrrichtung (z) verstellbar ist.

10. Wälzfräsmaschine (1) nach Anspruch 8 oder 9, **dadurch gekennzeichnet, dass** am Schwenkarm (16) weiterhin eine dritte Anfasvorrichtung (19) und/oder ein motorisch angetriebenes Feilwerkzeug (21) angeordnet ist.

11. Wälzfräsmaschine (1) nach Anspruch 10, **dadurch gekennzeichnet, dass** die dritte Anfasvorrichtung (19) und/oder das Feilwerkzeug (21) in Verschwenkrichtung versetzt zum wenigstens einen Schneidwerkzeug (15a, 15b) des Schwenkarms (16) angeordnet ist, so dass die dritte Anfasvorrichtung (19) und/oder das Feilwerkzeug (21) einerseits und das wenigstens eine Schneidwerkzeug (15a, 15b) des Schwenkarms (16) andererseits bei unterschiedlichen Verschwenkwinkeln des Schwenkarms (16) am Werkstück (5) angreifen.

12. Wälzfräsmaschine (1) nach einem der vorhergehenden Ansprüche, **dadurch gekennzeichnet, dass** die Anfasvorrichtungen (13, 14, 19) jeweils zwei einander gegenüberliegende Anfasscheiben aufweisen, deren Abstand parallel zur Verfahrrichtung (z) verstellbar ist.

13. Wälzfräsmaschine (1) nach einem der vorhergehenden Ansprüche, **dadurch gekennzeichnet, dass** die erste und/oder die zweite Anfasvorrichtung (13; 14) auf dem gemeinsamen Schlitten (10) parallel zur Verfahrrichtung (z) verschiebbar ist.

14. Verwendung einer Wälzfräsmaschine (1) nach einem der vorhergehenden Ansprüche zum
a) Wälzfräsen eines Werkstücks (5) mit dem Wälzfräskopf (7) und
b) anschließendem Anfasen des Werkstücks (5) gleichzeitig in zwei unterschiedlichen axialen Bereichen (6a, 6b) des Werkstücks (5) mit dem ersten und dem zweiten Anfaswerkzeug (13, 14),
wobei das Wälzfräsen und das Anfasen in derselben Aufspannung des Werkstücks (5) auf der Werkstückspindel (2) erfolgt.

15. Verwendung nach Anspruch 14, **dadurch gekennzeichnet, dass** nach dem Anfasen in derselben Aufspannung des Werkstücks (5) auf der Werkstückspindel (2) weiterhin
c) ein Feinfräsen des Werkstücks (5) mit dem Wälzfräskopf (7) erfolgt.

## Claims

1. Hobbing machine (1), comprising:
- a workpiece spindle (2) for rotating a workpiece (5) about an axis of rotation (RA),
- a hobbing head (7) for hobbing the workpiece (5),
- a first chamfering device (13) for chamfering the workpiece (5) in a first axial area (6a),
- a second chamfering device (14) for chamfering the workpiece (5) in a second axial area (6b), and
- a common carriage (10) on which the hobbing head (7) as well as the first chamfering device (13) and the second chamfering device (14) are arranged, and by means of which the hobbing head (7), the first chamfering device (13) and the second chamfering device (14) can be moved together along a direction of movement (z),
**characterized in that**
the hobbing head (7) can be moved on the common carriage (10) by means of a hobbing feed device (9) in a feed direction (x1) perpendicular to the direction of movement (z) of the common carriage (10) independently of the chamfering devices (13, 14).

2. Hobbing machine (1) according to claim 1, **characterized in that** the axis of rotation (RA) of the workpiece spindle (2) and the direction of movement (z) of the common carriage (10) extend in parallel.

3. Hobbing machine (1) according to any one of the preceding claims, **characterized in that** the axis of rotation (RA) of the workpiece spindle (2) and the direction of movement (z) each extend in a horizontal direction.

4. Hobbing machine (1) according to any one of the preceding claims, **characterized in that** the hobbing head (7), the first chamfering device (13) and the second chamfering device (14) are arranged on the common carriage (10) behind one another with respect to the direction of movement (z) of the common carriage (10), in particular, wherein the first chamfering device (13) and the second chamfering device (14) are adjacent to each other on the common carriage (10).

5. Hobbing machine (1) according to any one of the preceding claims, **characterized in that** the first chamfering device (13) on the common carriage (10) can be moved in a feed direction (x2) perpendicular to the direction of movement (z) of the common carriage (10) by means of a first chamfering feed device (11), and that the second chamfering device (14) on the common carriage (10) can be moved in a feed direction (x3) perpendicular to the direction of movement (z) of the common carriage (10) by means of a second chamfering feed device (12).

6. Hobbing machine (1) according to any one of the preceding claims, **characterized in that** the feed direction (x1) of the hobbing head (7) extends in a horizontal direction or with an inclination of up to 25° relative to the horizontal.

7. Hobbing machine (1) according to any one of the preceding claims, **characterized in that** the first chamfering device (13) and the second chamfering device (14) are each designed as combined chamfering and cutting devices which are each also designed to peel primary and/or secondary burrs off the workpiece (5).

8. Hobbing machine (1) according to any one of the preceding claims, **characterized in that** a pivot arm (16) is formed on the hobbing machine (1), the pivot arm being movable on a pivot arm carriage (17) along an additional direction of movement (z') parallel with respect to the direction of movement (z) and being pivotable on the pivot arm carriage (17) about an axis (SA) which extends parallel with respect to the direction of movement (z),
and that at least one cutting tool (15a, 15b) is provided on the pivot arm (16) for peeling primary and/or secondary burrs off the workpiece (5).

9. Hobbing machine (1) according to claim 8, **characterized in that** two cutting tools (15a, 15b) are arranged on the pivot arm (16), the distance between which can be adjusted parallel to the direction of movement (z).

10. Hobbing machine (1) according to claim 8 or 9, **characterized in that** a third chamfering device (19) and/or a motor-driven filing tool (21) is/are furthermore arranged on the pivot arm (16).

11. Hobbing machine (1) according to claim 10, **characterized in that** the third chamfering device (19) and/or the filing tool (21) is/are arranged such that they are offset in the pivot direction with respect to the at least one cutting tool (15a, 15b) of the pivot arm (16) such that the third chamfering device (19) and/or the filing tool (21) on the one hand and the at least one cutting tool (15a, 15b) of the pivot arm (16) on the other hand engage the workpiece (5) at different pivot angles of the pivot arm (16).

12. Hobbing machine (1) according to any one of the preceding claims, **characterized in that** the chamfering devices (13, 14, 19) each comprise two opposing chamfering discs the distance between which can be adjusted parallel to the direction of movement (z).

13. Hobbing machine (1) according to any one of the preceding claims, **characterized in that** the first and/or the second chamfering device (13, 14) can be shifted on the common carriage (10) parallel to the direction of movement (z).

14. The use of a hobbing machine (1) according to any one of the preceding claims for
a) hobbing a workpiece (5) using the hobbing head (7) and
b) subsequent chamfering of the workpiece (5) simultaneously in two different axial areas (6a, 6b) of the workpiece (5) with the first and the second chamfering tool (13, 14),
wherein hobbing and chamfering is carried out with the workpiece (5) in the same clamping setup on the workpiece spindle (2).

15. The use according to claim 14, **characterized in that** after chamfering, with the workpiece (5) in the same clamping setup on the workpiece spindle (2), there furthermore follows c) precision milling of the workpiece (5) using the hobbing head (7).

## Revendications

1. Machine (1) de taillage par fraise-mère, comprenant
- une broche (2) porte-pièces, conçue pour faire tourner une pièce à usiner (5) autour d'un axe de rotation (RA),
- une tête (7) de taillage par fraise-mère, dévolue à l'usinage de ladite pièce (5) par taillage à la fraise-mère,
- un premier dispositif de chanfreinage (13), conçu pour chanfreiner ladite pièce à usiner (5) dans une première région axiale (6a),
- un deuxième dispositif de chanfreinage (14), conçu pour chanfreiner ladite pièce à usiner (5) dans une seconde région axiale (6b), et
- un chariot commun (10) sur lequel sont implantés, à la fois, la tête (7) de taillage par fraise-mère, le premier dispositif de chanfreinage (13) et le deuxième dispositif de chanfreinage (14), et par lequel ladite tête (7) de taillage par fraise-mère, ledit premier dispositif de chanfreinage (13) et ledit deuxième dispositif de chanfreinage (14) peuvent être déplacés conjointement le long d'une direction de déplacement (z),
**caractérisée par le fait**
**que** la tête (7) de taillage par fraise-mère peut être déplacée sur le chariot commun (10) au moyen d'un dispositif (9) de pilotage du taillage par fraise-mère, indépendamment des dispositifs de chanfreinage (13, 14), dans une direction d'avance (x1) perpendiculaire à la direction de déplacement (z) dudit chariot commun (10).

2. Machine (1) de taillage par fraise-mère, selon la revendication 1, **caractérisée par le fait que** l'axe de rotation (RA) de la broche (2) porte-pièces, et la direction de déplacement (z) du chariot commun (10), s'étendent parallèlement.

3. Machine (1) de taillage par fraise-mère, selon l'une des revendications précédentes, **caractérisée par le fait que** l'axe de rotation (RA) de la broche (2) porte-pièces, et la direction de déplacement (z), s'étendent à chaque fois dans le sens horizontal.

4. Machine (1) de taillage par fraise-mère, selon l'une des revendications précédentes, **caractérisée par le fait que** la tête (7) de taillage par fraise-mère, le premier dispositif de chanfreinage (13) et le deuxième dispositif de chanfreinage (14) sont agencés en succession, sur le chariot commun (10), par rapport à la direction de déplacement (z) dudit chariot commun (10), sachant notamment que ledit premier dispositif de chanfreinage (13) et ledit deuxième dispositif de chanfreinage (14) sont voisins l'un de l'autre sur ledit chariot commun (10).

5. Machine (1) de taillage par fraise-mère, selon l'une des revendications précédentes, **caractérisée par le fait**
**que** le premier dispositif de chanfreinage (13) peut être déplacé sur le chariot commun (10), au moyen d'un premier dispositif (11) de pilotage du chanfreinage, dans une direction d'avance (x2) perpendiculaire à la direction de déplacement (z) dudit chariot commun (10) ;
et par le fait que le deuxième dispositif de chanfreinage (14) peut être déplacé sur ledit chariot commun (10), au moyen d'un second dispositif (12) de pilotage du chanfreinage, dans une direction d'avance (x3) perpendiculaire à la direction de déplacement (z) dudit chariot commun (10).

6. Machine (1) de taillage par fraise-mère, selon l'une des revendications précédentes, **caractérisée par le fait que** la direction d'avance (x1) de la tête (7) de taillage par fraise-mère s'étend horizontalement, ou avec inclinaison atteignant jusqu'à 25° par rapport à l'horizontale.

7. Machine (1) de taillage par fraise-mère, selon l'une des revendications précédentes, **caractérisée par le fait que** le premier dispositif de chanfreinage (13) et le deuxième dispositif de chanfreinage (14) sont respectivement réalisés sous la forme d'un dispositif combiné de chanfreinage et de coupe également conçu, à chaque fois, en vue d'enlever des bavures primaires et/ou secondaires de la pièce à usiner (5).

8. Machine (1) de taillage par fraise-mère, selon l'une des revendications précédentes, **caractérisée par le fait qu'**un bras pivotant (16), ménagé sur ladite machine (1) de taillage par fraise-mère, peut être déplacé sur un chariot (17) le long d'une direction de déplacement additionnel (z'), parallèlement à la direction de déplacement (z), et peut pivoter sur ledit chariot (17), autour d'un axe (SA) s'étendant parallèlement à ladite direction de déplacement (z) ;
et **par le fait qu'**au moins un outil de coupe (15a, 15b), affecté à l'enlèvement de bavures primaires et/ou secondaires de la pièce à usiner (5), est installé sur ledit bras pivotant (16).

9. Machine (1) de taillage par fraise-mère, selon la revendication 8, **caractérisée par le fait que** deux outils de coupe (15a, 15b), dont l'espacement peut être réglé parallèlement à la direction de déplacement (z), sont installés sur le bras pivotant (16).

10. Machine (1) de taillage par fraise-mère, selon la revendication 8 ou 9, **caractérisée par le fait qu'**un troisième dispositif de chanfreinage (19), et/ou un outil de limage (21) à entraînement motorisé, est (sont) par ailleurs installé(s) sur le bras pivotant (16).

11. Machine (1) de taillage par fraise-mère, selon la revendication 10, **caractérisée par le fait que** le troisième dispositif de chanfreinage (19) et/ou l'outil de limage (21) occupe(nt), dans la direction du pivotement, une position décalée par rapport à l'outil de coupe (15a, 15b) à présence minimale sur le bras pivotant (16), de telle sorte que, d'une part, ledit troisième dispositif de chanfreinage (19) et/ou ledit outil de limage (21) et, d'autre part, ledit outil de coupe (15a, 15b) à présence minimale sur ledit bras pivotant (16), viennent en prise avec la pièce à usiner (5) en présence de différents angles de pivotement dudit bras pivotant (16).

12. Machine (1) de taillage par fraise-mère, selon l'une des revendications précédentes, **caractérisée par le fait que** les dispositifs de chanfreinage (13, 14, 19) sont respectivement pourvus de deux disques de chanfreinage placés en vis-à-vis, dont l'espacement peut être réglé parallèlement à la direction de déplacement (z).

13. Machine (1) de taillage par fraise-mère, selon l'une des revendications précédentes, **caractérisée par le fait que** le premier et/ou le deuxième dispositif(s) de chanfreinage (13, 14) peu(ven)t être animé(s) de coulissements sur le chariot commun (10), parallèlement à la direction de déplacement (z).

14. Utilisation d'une machine (1) de taillage par fraise-mère conforme à l'une des revendications précédentes, en vue
a) du taillage par fraise-mère d'une pièce à usiner (5), à l'aide de la tête (7) de taillage par fraise-mère, et
b) du chanfreinage consécutif de ladite pièce à usiner (5), simultanément dans deux régions axiales différentes (6a, 6b) de ladite pièce à usiner (5), à l'aide des premier et deuxième outils de chanfreinage (13, 14),
sachant que ledit taillage par fraise-mère, et ledit chanfreinage, s'opèrent au cours du même ablocage de ladite pièce à usiner (5) sur la broche (2) porte-pièces.

15. Utilisation selon la revendication 14, **caractérisée par le fait qu'**à l'issue du chanfreinage au cours du même ablocage de la pièce à usiner (5) sur la broche (2) porte-pièces, il s'opère en outre
c) un fraisage fin de ladite pièce à usiner (5), à l'aide de la tête (7) de taillage par fraise-mère.
